# EUROPEAN PATENT APPLICATION

(11) **EP 2 293 564 A1**
(43) Date of publication of application: **09.03.2011**
(21) Application number: 10183181.6
(22) Date of filing: 09.10.2001
(51) Int. Cl.: H04N 7/173

(54) **Systems and methods for supplementing on-demand media**

(30) Priority: 11.10.2000 US 239521 P; 20.11.2000 US 252171 P; 21.02.2001 US 270351 P
(62) Divisional of application: 01981430.0
(71) Applicant: United Video Properties, Inc., Tulsa, OK 74136 (US)
(72) Inventor: Thomas, William L., Bixby, OK 74008 (US); Ellis, Michael, Boulder, CO 80304 (US); Berezowski, David M., Tulsa, OK 74133 (US); Easterbrook, Kevin B., Gilbert, AZ 85233 (US); Baumgartner, Joseph P., Tulsa, OK 74137 (US)
(74) Representative: Bryn-Jacobsen, Caelia

(57) **Abstract**

Systems and methods for providing supplemental content with an on-demand media in an interactive television application are described.

## Description

This application claims the benefit of U.S. provisional patent application Nos. 60/239,521, filed October 11, 2000, 60/252,171, filed November 20, 2000, and 60/270,351, filed February 21, 2001.

### Background of the Invention

This invention relates to systems and methods for providing on-demand media in interactive television applications, and, more particularly, to systems and methods for supplementing on-demand media in interactive television applications.

Currently, digital versatile discs (DVDs) are used to provide media users with various forms of media, typically videos. DVDs are also used to store supplementary material, such as actor interviews and theatrical trailers. However, such supplementary material is limited by the amount of space available on the disc. Furthermore, supplementary material stored on DVDs is not updatable.

Therefore, it would be desirable to provide large amounts of updatable media distribution systems which provide supplemental content for on-demand media.

### Summary of the Invention

This and other objects of the invention are accomplished in accordance with the principles of the present invention by providing systems and methods for supplementing on-demand media. Illustrative features of some embodiments of the present invention are described, for example, in U.S. provisional patent Application No. 60/239,521, filed October 11, 2000, which is hereby incorporated by reference herein in its entirety. Illustrative video-on-demand interface features for use in accordance with some embodiments of the present invention are described, for example, in U.S. provisional patent Application Nos. 60/252,171, filed November 20, 2000 and 60/270,351, filed February 21, 2001, where are hereby incorporated by reference herein in their entireties.

On-demand media may include, for example, audio-on-demand media, video-on-demand media, electronic publications (e.g., books, magazines, newspapers, or any other suitable electronic publications), electronic games, software applications, or any other suitable on-demand media. Supplemental content for such on-demand media may be any suitable passive or interactive text, graphics, animation, video, audio, or suitable combination thereof such as, for example, actor interviews, theatrical trailers, top-ten scenes in a movie, music videos, web sites, third-party applications, additional passive or interactive information associated with the on-demand media, or any other suitable supplemental content.

Some embodiments may display supplemental content separate from on-demand media in, for example, separate displays. Other embodiments may overlay supplemental content onto a display. For example, supplemental content may be overlaid over the on-demand media that the user is watching, an application display, or other suitable display. In some embodiments, supplemental content may be displayed in response to user actions. For example, supplemental content may be displayed when a user selects a media listing from a guidance application, as the user browses through listings, or when a user selects on-demand media. In some embodiments, supplemental content may be displayed for a predefined period of time when the user first accesses a segment of on-demand media (e.g., a scene in a movie), and then the supplemental content may disappear (e.g., fade away). Some embodiments may provide supplemental content only in response to the user's request (e.g., selecting an on-screen button).

Supplementing on-demand media may be performed by any suitable stand-alone, distributed, or client-server based application. For example, a stand-alone interactive television application, such as an interactive television program guide or other suitable guidance application, may receive supplemental content and supplement on-demand media.

Supplemental content may be distributed using any suitable approach. Supplemental content, or links to supplemental content, may be provided as, for example, synchronous metadata. Synchronous metadata is data that is sent logically at the same time as the on-demand media with which it is associated. The synchronous metadata may be supplied contemporaneously with the media, or prior to the media but with information associating it with the media (e.g., identifiers, links, or any other suitable information). Metadata may be provided in-band with or separate from the media, out-of-band, using a carousel-based approach, using a client-server based approach, using localized caching, using a combination of these approaches, or using any other suitable approach. One or more of these approaches may require that a user's in-home equipment include multiple tuners. Local caching may be used to enhance the response time of the system.

### Brief Description of the Drawings

The above and other objects and advantages of the invention will be apparent upon consideration of the following detailed description, taken in conjunction with the accompanying drawings, in which like reference characters refer to like parts throughout, in which:
FIG. 1 is a schematic block diagram of an illustrative interactive television system, in accordance with one embodiment of the present invention.
FIG. 2A-2E show illustrative arrangements for the interactive television application equipment of FIG. 1, in accordance with various embodiments of the present invention.
FIG. 3 is an illustrative schematic block diagram of user television equipment of FIGS. 2A-2E, in accordance with one embodiment of the present invention.
FIG. 4 is a generalized schematic block diagram of portions of the illustrative user television equipment of FIG. 3, in accordance with one embodiment of the present invention.
FIG. 5 is an illustrative main menu display that may be displayed by an interactive television application, in accordance with one embodiment of the present invention.
FIG. 6 is an illustrative video-on-demand menu display that may be displayed by an interactive television application, in accordance with one embodiment of the present invention.
FIG. 7 is an illustrative display that may be displayed by an interactive television application when a user browses through media listings, in accordance with one embodiment of the present invention.
FIG. 8 is an illustrative combined display that may be displayed by an interactive television application when a user browses through on-demand and non-on-demand media listings, in accordance with one embodiment of the present invention.
FIG. 9 is an illustrative display that may be displayed by an interactive television application in response to a request to order on-demand media, in accordance with one embodiment of the present invention.
FIG. 10 is an illustrative setup display that may be displayed by an interactive television application, in accordance with one embodiment of the present invention.
FIG. 11 is an illustrative display that may be displayed by an interactive television application for providing a user with options along with the on-demand media, in accordance with one embodiment of the present invention.
FIGS. 12 and 13 are illustrative displays that may be displayed by an interactive television application in response to a user indicating a desire to view actor-related information, in accordance with one embodiment of the present invention.
FIG. 14 is an illustrative display that may be displayed by an interactive television application in response to a user indicating a desire to view supplemental content related to an actor that the user is currently watching, in accordance with one embodiment of the present invention.
FIG. 15 is an illustrative display that may be displayed by an interactive television application in response to a user indicating a desire to view additional information related to an actor that the user is currently watching, in accordance with one embodiment of the present invention.
FIGS. 16 and 17 are illustrative displays that may be displayed by an interactive television application in response to a user indicating a desire to receive interactive media related to on-demand media, in accordance with one embodiment of the present invention.
FIGS. 18 and 19 are illustrative displays that may be displayed by an interactive television application in response to a user indicating a desire to receive information related to the audio portion of on-demand media, in accordance with one embodiment of the present invention.
FIG. 20 is an illustrative display that may be displayed by an interactive television application in response to a user indicating a desire to receive links related to on-demand media, in accordance with one embodiment of the present invention.
FIG. 21 is a flowchart of illustrative steps involved in providing supplemental content for on-demand media, in accordance with one embodiment of the present invention.
FIG. 22 is a flowchart of illustrative steps involved in retrieving supplemental content for on-demand media, in accordance with one embodiment of the present invention.
FIG. 23 is a flowchart of illustrative steps involved in providing the user with on-demand media, in accordance with one embodiment of the present invention.
FIG. 24 is a flowchart of illustrative steps involved in presenting the user with supplemental content for selected on-demand media, in accordance with one embodiment of the present invention.

### Detailed Description of the Invention

An interactive television application for supplementing on-demand media may be based on any suitable hardware platform or topology. Suitable hardware that may be used in implementing such an interactive television application includes hardware such as satellite receivers, personal computer televisions (PC/TVS), personal computers (e.g., with television tuner cards), cable set-top boxes, or any other suitable hardware. In some embodiments, the interactive television application may be an interactive television program guide. Illustrative interactive television program guide systems are described, for example, in Knee et al. U.S. patent 5,589,892 and Knudson et al. U.S. patent application Serial No. 09/357,941, filed July 16, 1999, which are hereby incorporated by reference herein in their entireties. Client-server program guide systems are described, for example, in Ellis et al. U.S. patent application Serial No. 09/374,043, filed August 13, 1999, which is hereby incorporated by reference herein in its entirety. On-line program guide systems are described, for example, in Boyer et al. U.S. patent application Serial No. 08/938,028, filed September 18, 1997, which is hereby incorporated by reference herein in its entirety.

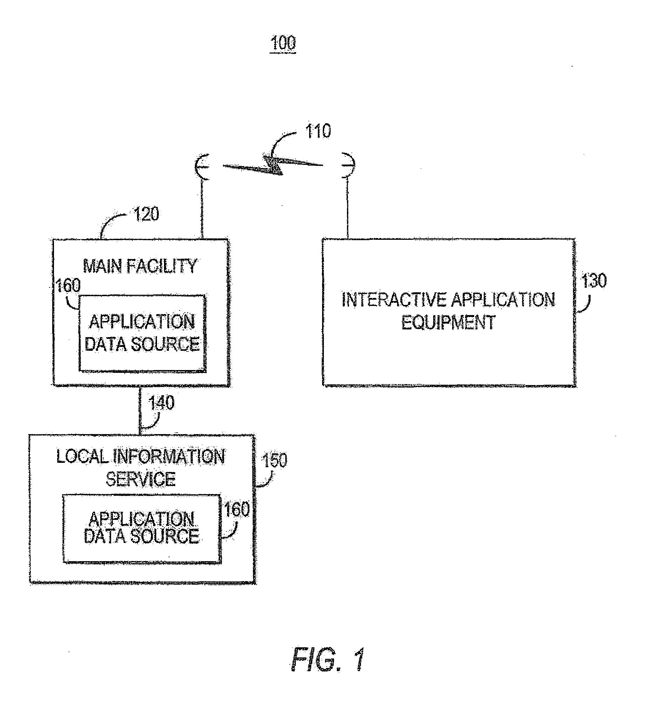

An illustrative system 100 in accordance with one embodiment of the present invention is shown in FIG. 1. Main facility 120 provides application data from application data source 160 to interactive application equipment 130 via communications link 110. There may be multiple application data sources but only one has been shown to avoid over-complicating the drawing. If desired, application data sources may be located at facilities separate from main facility 120, such as at local information service 150, and have their data provided to main facility 120 for localization and distribution. Application data source 160 may be any suitable computer or computer-based system for generating or obtaining data (e.g., manually from an operator, electronically via a computer network or other connection, or via storage media) and putting the data into electronic form for distribution by main facility 120. Link 110 may be a satellite link, a telephone network link, a cable or fiber optic link, a microwave link, an Internet link, a combination of such links, or any other suitable communications link. Video signals may also be transmitted over link 110 if desired.

The application data distributed by main facility 120 to interactive application equipment 130 may include any suitable application data. The application data may include video-on-demand information, audio-on-demand information, supplemental content, or any other media-on-demand-related information. In some embodiments, the application data may include television programming data (e.g., program identifiers, times, channels, titles, and descriptions) and other data for services other than television program listings (e.g., help text, pay-per-view information, weather information, sports information, music channel information, associated Internet web links, associated software, etc.). There are preferably numerous pieces or installations of interactive application equipment 130, although only one is shown in FIG. 1 to avoid over-complicating the drawing.

Application data may be transmitted by main facility 120 to interactive application equipment 130 using any suitable approach. For example, main facility 120 may distribute application data periodically, continuously, or with any other frequency, as being files or as a stream. In some approaches, data files may, for example, be encapsulated as objects transmitted using a suitable Internet based addressing scheme and protocol stack (e.g., a stack which uses the user datagram protocol (UDP) and Internet protocol (IP)). Systems in which data is transmitted from a main facility to television distribution facilities using such an approach are described, for example, in Gollahon et al. U.S. patent application Serial No. 09/332,624, filed June 11, 1999, which is hereby incorporated by reference herein in its entirety.

Supplementing on-demand media may be performed by any suitable stand-alone, distributed, or client-server based application. For example, a stand-alone interactive television application, such as an interactive television program guide or other suitable guidance application, may receive supplemental content and supplement on-demand media. Supplemental content for such on-demand media may be any suitable passive or interactive text, graphics, animation, video, audio, or suitable combination thereof such as, for example, actor interviews, theatrical trailers, top-ten scenes in a movie, music videos, web sites, third-party applications, additional passive or interactive information associated with the on-demand media, or any other suitable supplemental content.

In some embodiments, supplemental content may be generated and transmitted at main facility 120 and accumulated at distribution facility 180 (e.g., a cable system headed). Supplemental content may be transmitted concurrently with application data and stored in user television equipment 200. Alternately, supplemental content may be transmitted with on-demand media. It is noted that distribution facility 180 may distribute supplemental content periodically, continuously, or with any other frequency, as being files or as a stream.

In some embodiments, supplemental content may be transmitted with on-demand media. The supplemental content may be accumulated at distribution facility 180 and provided with on-demand media. In some approaches, the supplemental content may be downloaded to user television equipment 200 prior to the viewing of the selected on-demand media. For example, when a user indicates a desire to view an on-demand media selection at a predetermined time (e.g., two hours from the indication), the corresponding supplemental content may be transmitted prior to viewing the selected on-demand media.

Local information service 150 may be any facility suitable for obtaining data particular to a localized region and providing the data to main facility 120 over communications link 140. Local information service 150 may be, for example, a local weather station that measures weather data, a local newspaper that obtains local high school and college sporting information, or any other suitable provider of information. Local information server 150 may be a local business with a computer for providing main facility 120 with, for example, local ski reports, fishing conditions, menus, etc., or any other suitable provider of information. Link 140 may be a satellite link, a telephone network link, a cable or fiber optic link, a microwave link, an Internet link, a combination of such links, or any other suitable communications link.

In some embodiments, local information service 150 may be any suitable facility for providing supplementary content particular to a localized region. Local information service 150 may provide supplemental content to main facility 120 over communications link 140 for accumulation at distribution facility 180 (e.g., a cable system headend). Local information service 150 may be used to provide, for example, national and local advertisements relating to the selected on-demand media.

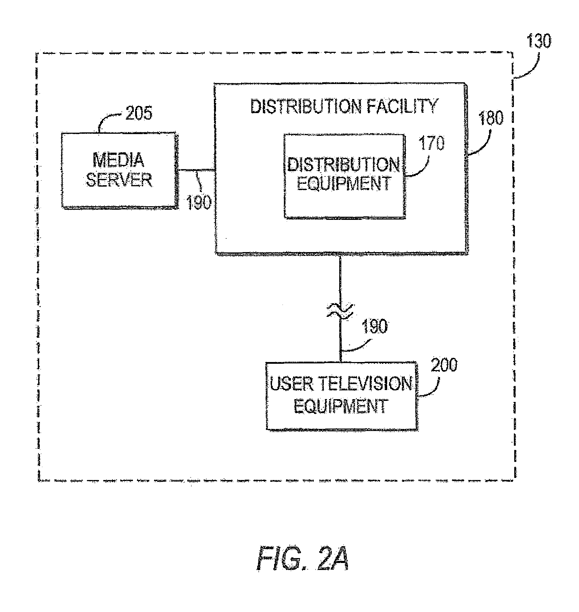

An interactive television application may be implemented on interactive application equipment 130. Five illustrative arrangements for interactive application equipment 130 are shown in FIGS. 2A-2E. As shown, interactive application equipment 130 may include distribution facility 180, distribution equipment 170 located at distribution facility 180, and user television equipment 200.

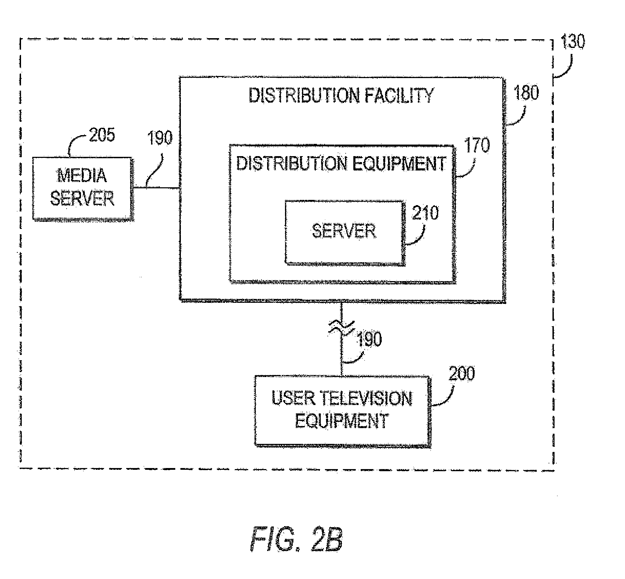

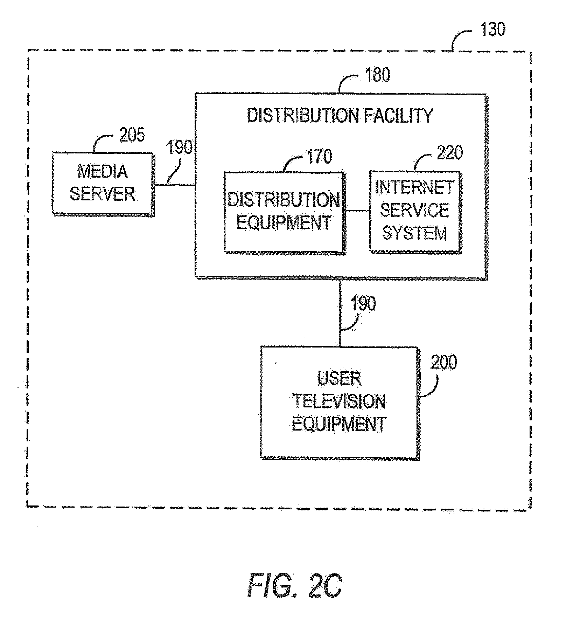

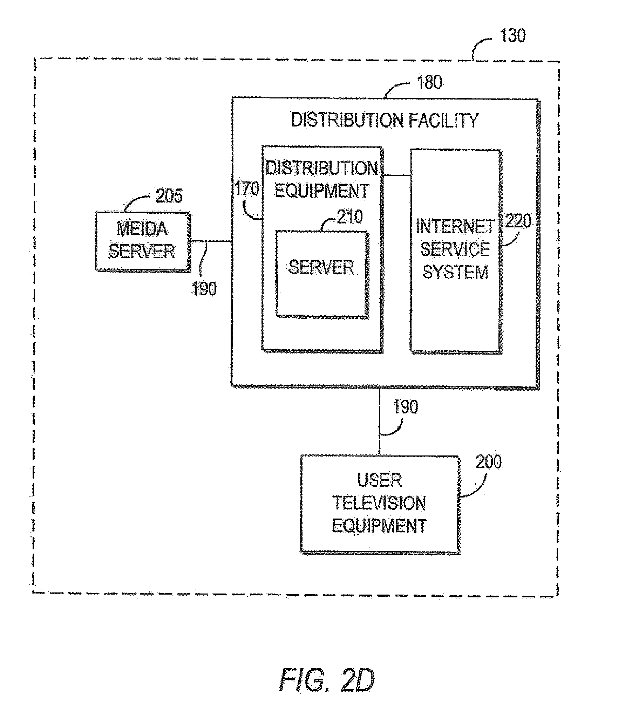

The interactive television application, such as an interactive television program guide or other guidance application, web browser, or other suitable interactive television application, may run totally on user television equipment 200 using the arrangements of FIGS. 2A and 2C, or may run partially on user television equipment 200 and partially on interactive application equipment 130 using a suitable client-server or distributed processing arrangement such as those shown in FIGS. 2B and 2D. Distribution facility 180 may be any suitable distribution facility (e.g., a cable system headend, a broadcast distribution facility, or any other suitable type of distribution facility), and may have distribution equipment 170.

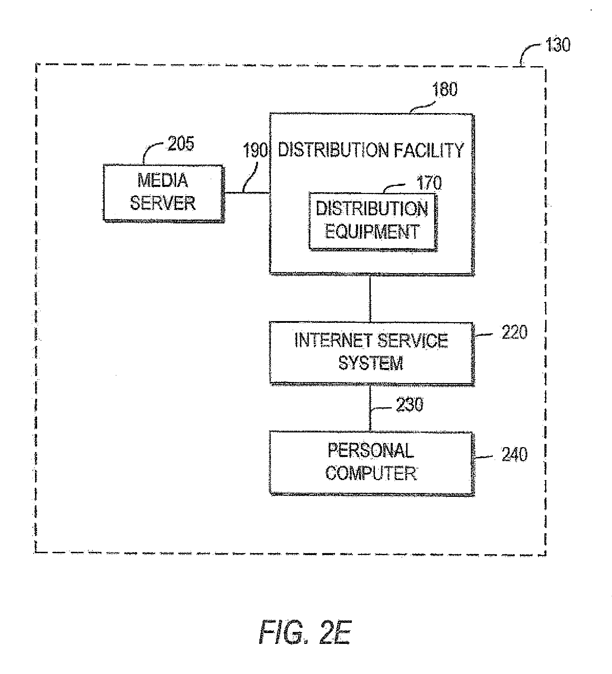

Distribution equipment 170 of FIGS. 2A, 2B, 2C, and 2D is equipment suitable for providing application data to user television equipment 200 over communications path 190. In FIG. 2E, distribution equipment 170 may provide application data, such as program guide data, to Internet service system 220 via, for example, a suitable computer network or Internet link.

Supplemental content, or links to content, may be distributed to user television equipment 200 by distribution equipment 170 as, for example, synchronous metadata. Synchronous metadata is data that is sent logically at the same time as the media with which it is associated. The metadata may be provided in-band with or separate from the media, out-of-band, using a carousel-based approach, using a client-server based approach, using localized caching, using a combination of these approaches, or using any other suitable approach. The synchronous metadata may be supplied contemporaneously with the media, or prior to the media but with information associating it with media (e.g., identifiers, links, or any other suitable information). One or more of these approaches may require that a user's in-home equipment include multiple tuners. Localized caching may be used to enhance the response time of the system.

The metadata may include other types of data. The metadata may include, for example, commands that indicate to the users' in-home equipment (or client applications running on the equipment) that a particular action is to be performed (e.g., overlaying a visual indicator onto the on-demand media). The metadata may include, for example, a directory that indicates segments of on-demand media, a directory of supplemental content that is available for the on-demand media, or any other suitable information. In some approaches, the metadata may be used as markers within the on-demand media. For example, supplemental content may include a number of segments (e.g., actor interviews, trailers, top-ten scenes in the movie, music videos, or any other suitable segment). The segments may be provided along with the actual movie or separately from the actual movie. The system may provide a menu that indicates the segments and allows the user to jump directly to the segment based on the metadata.

Distribution equipment 170 may include, for example, suitable transmission hardware for distributing application data on a television channel sideband, in the vertical blanking interval of a television channel, using an in-band digital signal, using an out-of-band digital signal, or by any other suitable data transmission technique. Analog or digital signals for on-demand media (e.g., television programs, on-demand movies, on-demand music, etc.) may also be distributed by distribution equipment 170 to user television equipment 200 over communications paths 190 on multiple television channels. Alternatively, on-demand media may be distributed to user television equipment 200 from some other suitable distribution facility, such as a cable system headend, a broadcast distribution facility, a satellite television distribution facility, or any other suitable type of television distribution facility. In another suitable approach, on-demand media may be distributed from an in-home server. In yet another suitable approach, the media may be a media segment or program that the use has previously selected to be recorded.

Communications paths 190 may be any communications paths suitable for distributing application data. Communications paths 190 may include, for example, a satellite link, a telephone network link, a cable or fiber optic link, a microwave link, an Internet link, a data-over-cable service interface specification (DOCSIS) link, a radio frequency link, a combination of such links, or any other suitable communications link. Communications paths 190 preferably have sufficient bandwidth to allow distribution facility 180 or another distribution facility to distribute television programming to user television equipment 200. There are typically multiple pieces of user television equipment 200 and multiple associated communications paths 190, although only one piece of user television equipment 200 and communications path 190 are shown in FIGS. 2A-2D to avoid over-complicating the drawings. If desired, television programming, application data, supplemental content, and on-demand media may be provided over separate communications paths.

FIG. 2B shows an illustrative arrangement for interactive application equipment 130 in a client-server based or distributed interactive application system. As shown in FIG. 2B, distribution equipment 170 may include server 210. Server 210 may use any suitable combination of hardware and software to provide a client-server based application. Server 210 may, for example, run a suitable database engine (e.g., SQL Server by Microsoft) and provide application data and supplemental content in response to queries generated by an application client implemented on user television equipment 200. If desired, server 210 may be located at main facility 120, or other location, such as a cable system headend, a broadcast distribution facility, a satellite television distribution facility, or any other suitable type of television distribution facility.

The application client may retrieve application data and supplemental content from server 210 using any suitable client-server based approach. The client may, for example, pass SQL requests as messages to server 210. In another suitable approach, the application client may invoke remote procedures that reside on server 210 using one or more remote procedure calls. Server 210 may execute SQL statements for such invoked remote procedures. In still another suitable approach, client objects executed by the application may communicate with server objects executed by server 210 using, for example, an object request broker (ORB). This may involve using, for example, Microsoft's Distributed Component Object Model (DCOM) approach. In another suitable approach, the application client may also retrieve supplemental content from server 205 over communications path 190.

The application client may communicate with server 210 over communications path 190 using any suitable network and transport layer protocols, if desired. They may communicate, for example, using a protocol stack which includes Sequenced Packet Exchange/Internetwork Packet Exchange (SPX/IPX) layers, Transmission Control Protocol/Internet Protocol (TCP/IP) layers, Appletalk Transaction Protocol/Datagram Delivery Protocol (ATP/DDP) layers, DOCSIS or any other suitable network and transport layer protocols.

FIGS. 2C and 2D show illustrative Internet-based interactive television application systems. Distribution facility 180 may, for example, include Internet service system 220. Internet service system 220 may use any suitable combination of hardware and software capable of providing application data to the application using an Internet based approach (e.g., the HyperText Transfer Protocol (HTTP)). If desired, Internet service system 220 may be located at a facility that is separate from distribution facility 180.

If the application is implemented on user television equipment 200 of interactive application equipment 130 as shown in FIG. 2C, Internet service system 220 (or other suitable equipment at distribution facility 180 that is connected to Internet service system 220) may provide application data and supplemental content to user television equipment 200 via the Internet, or via distribution equipment 170 using any suitable Internet-based approach (e.g., using the HyperText Transfer Protocol (HTTP) over a Transmission Control Protocol/Internet Protocol (TCP/IP) type link). If the interactive television application implemented on interactive application equipment 130 is a client-server based application as shown in FIG. 2D, server 210 may obtain application data and supplemental content from Internet service system 220. The application may also, however, obtain application data from Internet service system 220 via an Internet connection.

In another suitable arrangement, distribution equipment 170 may include computer equipment or other suitable hardware on which a first portion or version of the interactive television application is implemented. A second portion or version of the application may be implemented on user television equipment 200. The two versions or portions of the interactive television application may communicate using any suitable peer-to-peer communications scheme (e.g., messaging, remote procedure calls, etc.) and perform interactive application functions distributively between distribution facility 180 and user television equipment 200.

Another suitable arrangement in which an on-line application, such as an on-line program guide, is implemented on interactive application equipment 130 is shown in FIG. 2E. On-line program guide systems are described, for example, in Boyer et al. U.S. patent application Serial No. 08/938,028, filed September 18, 1997, which is hereby incorporated by reference herein in its entirety. The user may have personal computer (PC) 240 on which a web-enabled application client or web browser is implemented. Personal computer 240 may be connected to Internet service system 220 via - Internet link 230. Internet service system 220 may use any suitable combination of computer hardware and software capable of providing an on-line server application or web site. Internet service system 220 is shown as obtaining application data from distribution facility 180. In other suitable approaches, Internet service system 220 may obtain information from other systems such as, for example, main facility 120, local information service 150, or any other suitable source of application data.

In the examples of FIGS. 2A-2E, on-demand media may be provided using remote servers such as a media server 205, server 210, or using any other suitable video-on-demand equipment. Servers such as media server 205, server 210, or other video-on-demand equipment may be located at network nodes associated with a distribution facility or any other suitable location. Although shown as separate, server 205 and server 210 may also be combined as a single server. Media server 205 may communicate with a distribution facility over communications path 190. The distribution facility may be a cable system headend, a satellite television distribution facility, a television broadcast facility, or any other suitable facility for distributing video-on-demand content, television, and music programming to users.

Supplemental content may be provided to user television equipment 200 with on-demand media according to the given approaches shown in FIGS. 2A-2E. In one suitable approach, supplemental content may be generated at main facility 120. Main facility 120 may transmit supplemental content to be stored at distribution facility 180. Distribution facility 180 may distribute supplemental content to user television equipment 200 via communications link 190. In another suitable approach, supplemental content may be created by main facility 160. Main facility 160 may distribute the supplemental content to user television equipment 200. In yet another suitable approach, when metadata is embedded within on-demand media, supplemental content may be retrieved from media server 205.

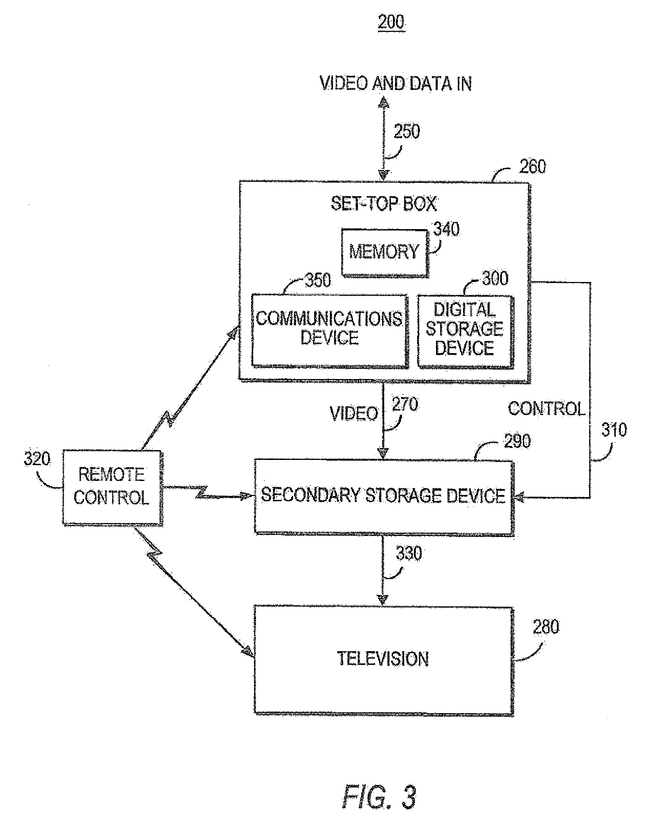

An illustrative arrangement for user television equipment 200 is shown in FIG. 3. In some embodiments, user television equipment 200 of FIG. 3 may receive video or a digital video stream and data from distribution facility 180 (FIG. 2a), such as a program distribution facility or some other suitable distribution facility, at input 250. In some embodiments, user television equipment 200 may receive video or a digital video stream and data directly from main facility 160. During normal television viewing, a user tunes set-top box 260 to a desired television channel. The signal for that television channel is then provided at video output 270. The signal supplied at output 270 is typically either a radio-frequency (RF) signal on a predefined channel (e.g., channel 3 or 4), or an analog demodulated video signal, but may also be a digital signal provided to television 280 on an appropriate digital bus (e.g., a bus using the Institute of Electrical and Electronics Engineers (IEEE) 1394 standard, (not shown)). The video signal at output 270 is received by optional secondary storage device 290.

The interactive television application may run on set-top box 260, on television 280 (if television 280 has suitable processing circuitry and memory), on a suitable analog or digital receiver connected to television 280, or on digital storage device 300 if digital storage device 300 has suitable processing circuitry and memory. The interactive television application may also run cooperatively on a suitable combination of these devices. Interactive television application systems in which a cooperative interactive television program guide application runs on multiple devices are described, for example, in Ellis U.S. patent application Serial No. 09/186,598, filed November 5, 1998, which is hereby incorporated by reference herein in its entirety.

Secondary storage device 290 can be any suitable type of analog or digital program storage device or player (e.g., a videocassette recorder (VCR), a personal video recorder (PVR), a digital versatile disc (DVD) player, etc.). Program recording and other features may be controlled by set-top box 260 using control path 310. If secondary storage device 290 is a videocassette recorder or a personal video recorder, for example, a typical control path 310 may involve the use of an infrared transmitter coupled to the infrared receiver in the recorder that normally accepts commands from a remote control such as remote control 320. Remote control 320 may be used to control set-top box 260, secondary storage device 290, and television 280.

In some embodiments, on-demand media may be stored on digital storage device 300. Distribution equipment 170 may stream on-demand media to be stored on digital storage device 300.

If desired, a user may record programs, application data, or a combination thereof in digital form on optional digital storage device 300. Digital storage device 300 may be a writeable optical storage device (such as a DVD player capable of handling recordable DVD discs), a magnetic storage device (such as a disk drive or digital tape), or any other digital storage device. Interactive television program guide systems that have digital storage devices are described, for example, in Hassell et al. U.S. patent application Serial No. 09/157,256, filed September 17, 1998, which is hereby incorporated by reference herein in its entirety.

Digital storage device 300 can be contained in set-top box 260 or it can be an external device connected to set-top box 260 via an output port and appropriate interface. If necessary, processing circuitry in set-top box 260 formats the received video, audio and data signals into a digital file format. Preferably, the file format is an open file format such as the Moving Picture Experts Group (MPEG) MPEG-2 standard or the Moving Joint Photographic Experts Group (MJPEG) standard. The resulting data is streamed to digital storage device 300 via an appropriate bus (e.g., a bus using the Institute Electrical and Electronics Engineers (IEEE) 1394 standard), and is stored on digital storage device 300. In another suitable approach, an MPEG-2 data stream or series of files may be received from distribution equipment 170 and stored.

Television 280 receives video signals from secondary storage device 290 via communications path 330. The video signals on communications path 330 may either be generated by secondary storage device 290 when playing back a prerecorded storage medium (e.g., a videocassette or a recordable digital video disc), by digital storage device 300 when playing back a pre-recorded digital medium, may be passed through from set-top box 260, may be provided directly to television 280 from set-top box 260 if secondary storage device 290 is not included in user television equipment 200, or may be received directly by television 280. During normal television viewing, the video signals provided to television 280 correspond to the desired channel to which a user has tuned with set-top box 260. Video signals may also be provided to television 280 by set-top box 260 when set-top box 260 is used to play back information stored on digital storage device 300.

Set-top box 260 may have memory 340. Memory 340 may be any memory or other storage device, such as a random access memory (RAM), read only memory (ROM), flash memory, a hard disk drive, a combination of such devices, etc., that is suitable for storing application instructions and application data for use by the interactive application.

Set-top box 260 may have communications device 350 for communicating directly with distribution equipment 170, server 210 or Internet service system 220 over communications path 190. Communications device 350 may be a modem (e.g., any suitable analog or digital standard, cellular, or cable modem), network interface card (e.g., an Ethernet card, Token ring card, etc.), or other suitable communications device. Communications device 350 may also be a personal computer with an Internet connection in, for example, the arrangement shown in FIGS. 2C and 2D. Television 280 may also have such a suitable communications device if desired. In an alternative approach, user television equipment 200 may communicate with Internet service system 220 via distribution equipment 170 using a suitable return path.

Application data may be stored in set-top box for use by the application. For example, two weeks of television program listings data may be stored by the application. All or part of the application data may be provided on-demand or in a continuous or periodic data stream, or using any other suitable approach. The application data may include universal identifiers for programs. The identifiers may be used by the application on playback or recording to indicate to the system provider what programs are being played back or recorded. The application data may include identifiers for commercials, scenes within programs, or any other media, or portions of media to attempt to maximize the granularity of the feedback. The system provider may be a program guide provider, a television service provider, Internet service providers, application providers, cable system operators, broadcast or satellite television operators, etc.

Supplemental content may also be stored in set-top box for use by the application. For example, supplemental content for upcoming on-demand media selections may be stored by the application. All or part of the supplemental content may be provided on-demand or in a continuous or periodic data stream, or using any other suitable approach. The selected on-demand media may include metadata, which may include a directory of supplemental content that is available for the on-demand media and markers for the on-demand media. Such markers may be used by the application on playback to indicate to the system provider what supplemental content should be pre-cached. Pre-caching supplemental content may attempt to maximize the granularity of the feedback.

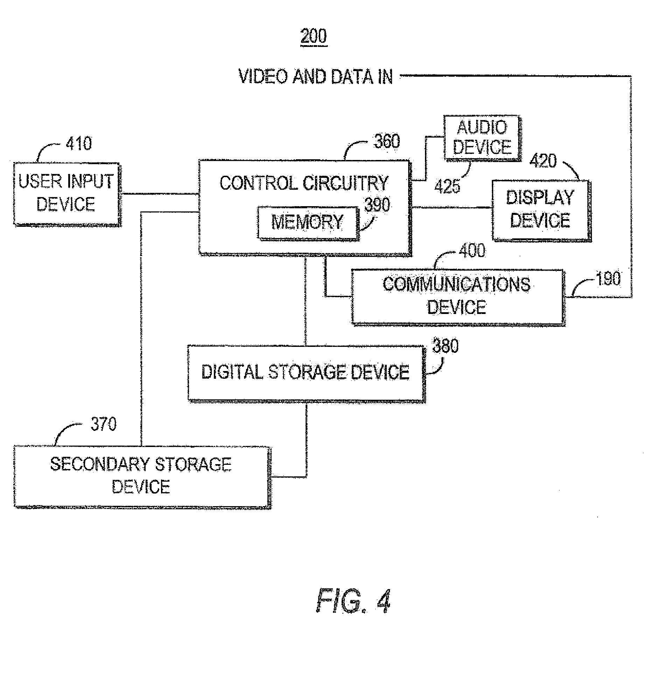

A more generalized embodiment of user television equipment 200 of FIG. 3 is shown in FIG. 4. As shown in FIG. 4, application data from distribution facility 180 (FIG. 2a) is received by control circuitry 360 of user television equipment 200. The functions of control circuitry 360 may be provided using the set-top box arrangement of FIGS. 2a and 2b. Alternatively, these functions may be integrated into an advanced television receiver, personal computer television (PC/TV), or any other suitable arrangement. If desired, a combination of such arrangements may be used.

User television equipment 200 may also have secondary storage device 370 and digital storage device 380 for recording media. Secondary storage device 370 can be any suitable type of analog or digital program storage device (e.g., a videocassette recorder (VCR), a personal video recorder (PVR), a digital versatile disc (DVD), etc.). Program recording and other features may be controlled by control circuitry 360. Digital storage device 380 may be, for example, a writeable optical storage device (such as a DVD player capable of handling recordable DVD discs), a magnetic storage device (such as a disk drive or digital tape), or any other digital storage device.

User television equipment 200 may also have memory 390. Memory 390 may be any memory or other storage device, such as a random access memory (RAM), read only memory (ROM), flash memory, a hard disk drive, a combination of such devices, etc., that is suitable for storing application instructions and application data for use by control circuitry 360.

User television equipment 200 of FIG. 4 may also have communications device 400 for supporting communications between the application and distribution equipment 170, server 210, or Internet service system 220 via communications path 190. Communications device 400 may be a modem (e.g., any suitable analog or digital standard, cellular, or cable modem), network interface card (e.g., an Ethernet card, Token ring card, etc.), or other suitable communications device.

A user may control the operation of user television equipment 200 with user input device 410. User input device 410 may be a pointing device, wireless remote control, keyboard, touch-pad, voice recognition system, or any other suitable user input device. To watch television, a user instructs control circuitry 360 to display a desired television channel on display device 420. Display device 420 may be any suitable television, monitor, or other suitable display device. To access the functions of the application, a user may instruct the application implemented on interactive application equipment 130 to generate a main menu or other desired display for display on display device 420. To access sound, a user may instruct control circuitry 360 to provide audio media on audio device 425. Audio device 425 may be part of display device 420, or may be separate.

The interactive television application may provide access to information and media that are available on-demand (e.g., video-on-demand, personal video recorders, etc.), and may supplement such on-demand media with any suitable passive or interactive content. On-demand media is media that a user may request for access (e.g., immediate or future playback) or distribution to the user's home equipment over a cable or other suitable path. On-demand media may include, for example, audio selections, video selections, electronic publications, electronic games, software applications, third-party applications, or other types of media.

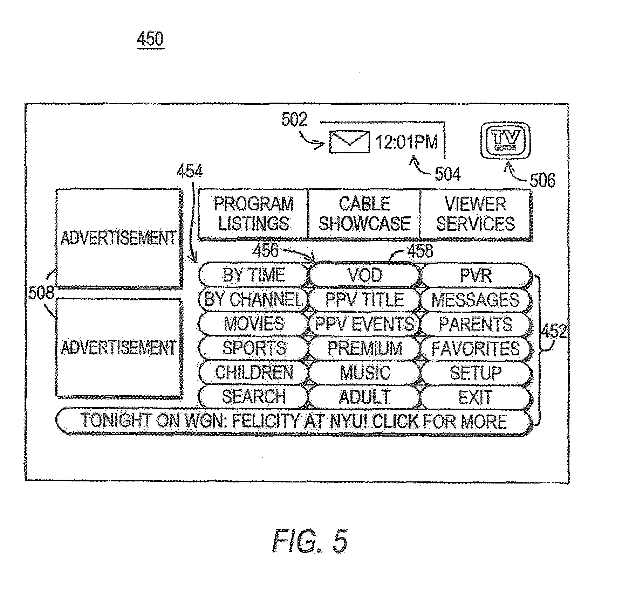

FIGS. 5-20 show illustrative displays for providing users with access to on-demand media and associated supplemental content. For purposes of illustration, the examples of FIGS. 5-20 are described primarily in the context of an interactive guidance application and, more particularly, an interactive television program guide system which provides video-on-demand media information. In other embodiments, the interactive guidance application may be an audio guidance application, a video-on-demand guide application, or any other suitable guidance application.

An illustrative interactive television main menu display 450 is shown in FIG. 5. Displays 450 and program guide displays generally may include mail icon 502, clock 504, provider logo 506, one or more interactive advertisements 508, and any other suitable display element. They may, for example, include other graphics, animations, selectable advertisements, video windows, or other suitable content.

Display 450 may contain selectable advertisements such as advertisements 508. Display 450 may also contain viewer services options 452. Suitable viewer services options 452 include, for example, an option to access features or information of a personal video recorder, an option to access messages (either e-mail messages or messages provided from television system service provider), an option to adjust parental control settings (e.g., blocked channels or ratings, etc.), an option to set favorites (e.g., favorite channels, etc.), an option to set up the interactive television application or user equipment, and an option to exit menu display 450.

Display 450 may also contain program listings options 454. Options 454 may include an option to view program listings organized by time, organized by channel, or organized by genre (e.g., sports, children, etc.). Options 454 may also include an option to search for programs of interest (e.g., using keywords, based on a title search, based on an actor search, etc.) .

Cable showcase options 456 may be selected to access video-on-demand program listings, pay-per-view program listings, pay-per-view event listings, premium channel listings, music channel listings, or adult program listings.

Users may select a desired option by, for example, positioning highlight region 458 on top of options 452, 454, and 456 using remote control 320 (FIG. 3) . The user may select the highlighted option by, for example, pressing a select or enter or OK key.

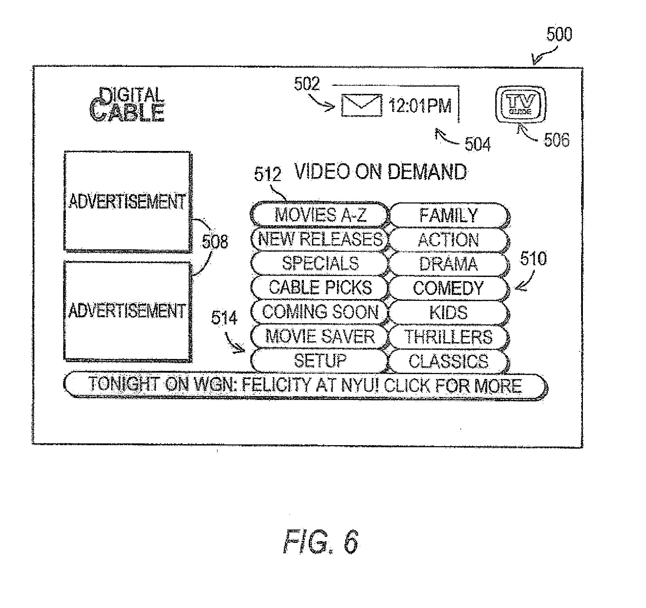

In response to a user selecting the "VOD" option of FIG. 5, the interactive television application may present the user with a display such as display 500 of FIG. 6. When the user selects an interactive advertisement 508 from an interactive television application display, the interactive television application may provide the user with additional information, with an opportunity to order a program or product, with an opportunity to set a reminder, or any other suitable feature that is related to the advertised on-demand media.

Display 500 may also contain various options that allow the user to view video-on-demand program listings organized by different genres (e.g., family, action, drama, comedy, kids, thrillers, classics, etc.). When the user selects one of these options, the interactive television application may provide a display in which all of the displayed program listings are video-on-demand program listings in the genre associated with the selected option. These selections for on-demand media are merely illustrative. In other embodiments, display 500 may include, for example, selections for audio-on-demand media, electronic publications, electronic games, software applications, or any other suitable on-demand media.

Display 500 of FIG. 6 shows illustrative video-on-demand options 510. Such options 510 may include various options that allow a user to view video-on-demand program listings organized by different genres (e.g., family, action, drama, comedy, kids, thrillers, classics, etc.). When the user selects one of these options 510, the interactive television application may provide the user with a display in which all of the displayed program listings are video-on-demand program listings in the genre associated with the selected option.

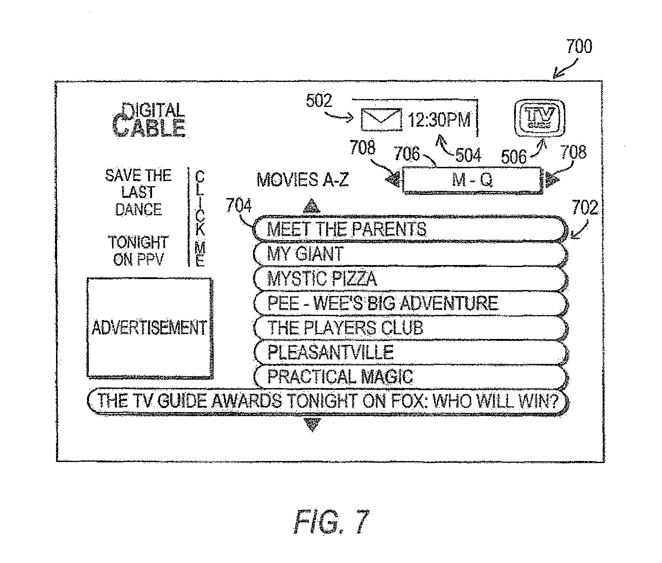

In response to, for example, the user selecting Movies A-Z option 512, the interactive application may provide listing displays, such as illustrative listing display 700 of FIG. 7.

Display 700 shows a portion of a list 702 of alphabetized video-on-demand movies that the interactive television application may display. Users may select listings by, for example, pressing the arrow keys of remote control 320 to position the highlight region 704 (as shown in FIG. 3), and pressing the "OK" key of the remote control. Listing indicator 706 may allow the user to view the video-on-demand movies available in selected subsets of the alphabet. Arrow indicators 708 may allow the user to advance through the alphabetized listing of video-on-demand movies.

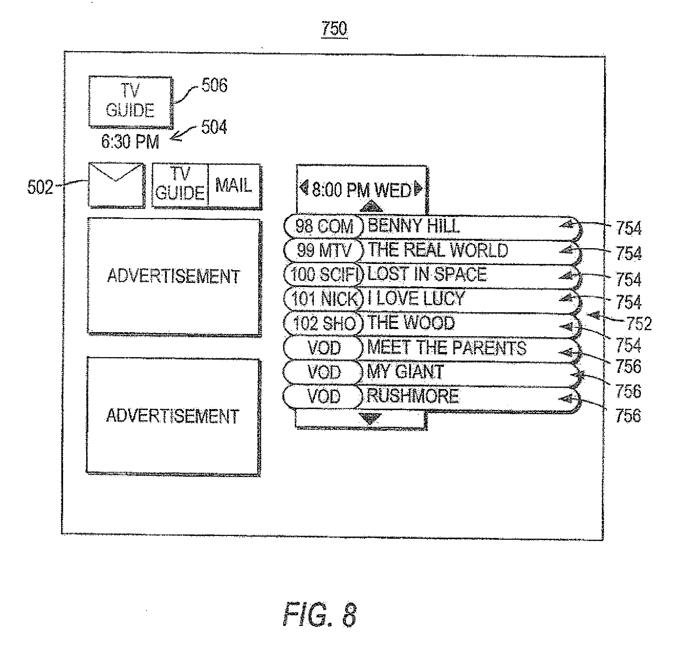

In some embodiments, the interactive television application may provide listings for on-demand and non-on-demand media in a single display, such as, for example, illustrative combined listings display 750 of FIG. 8. Display 750 includes program listings region 752 having listings 754 for non-on-demand media and listings 756 for on-demand media. One or more listings 754 may provide the user with information about programs on specific channels showing at a particular time. Listings 754 includes the names of programs showing at 8:00 PM on channel 98 through channel 102. Listings 756 may include the names of programs, the cost of each program, and other suitable information. Listings 754 and listings 756 may include other media-related information, such as program descriptions, ratings, any other suitable information. Display 750 may provide listings 756 such that users may access listings of video-on-demand media. The listings shown are merely illustrative. Any other suitable approach may also be used.

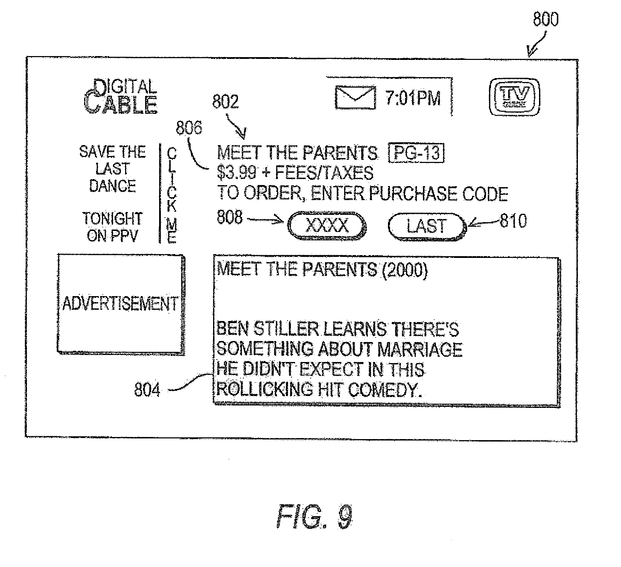

FIG. 9 shows an illustrative ordering display 800 that may be provided by the interactive television application in response to a user indicating a desire to access or download on-demand media, such as by, for example, selecting a movie listing from either FIG. 7 or FIG. 8. In this example, the user has selected "Meet the Parents." Display 800 may present one or more options to a user relating to ordering the selected video-on-demand media. Display 800 may include, for example, the title of the movie selection and a description of the selection. Description area 804 may include a detailed description of the selection, information on the actors, the running time, the year of release, the rating for the selection, and any other suitable information. As shown, display 800 may also include mail icon 502, current time 504, provider logo 506, and one or more interactive advertisements 508.

Display 800 may also include ordering information 806, a PIN entry region 808, and a "Last" button 810. Ordering information 806 may include the cost to purchase the selection. When the user desires to purchase the on-demand media, display 800 may allow the user to enter a purchase code or personal identification number (PIN) into PIN entry region 808. The user may enter the code or numbers using the remote control. If the user selects "Last" button 810, the user may be returned to a previous display, such as display 700 of FIG. 7.

When a valid purchase code or PIN is received by the interactive television application, the interactive television application may authorize the distribution of the selected on-demand media to the user. The selected media may be distributed by main facility 120 (FIG. 1) or any other suitable distribution source to the user television equipment.

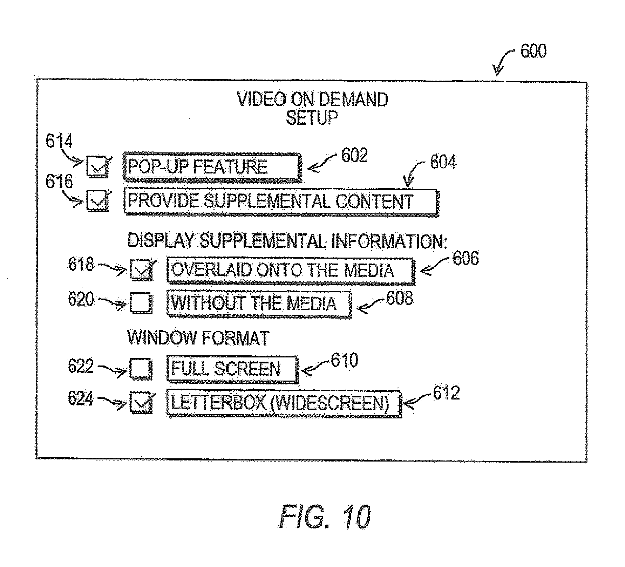

In some embodiments, display 500 of FIG. 6 may also include "Setup" option 514. In response to a user selecting "Setup" option 514, the interactive television application may provide setup options for, in this example, video-on-demand media. An illustrative video-on-demand setup display 600 is shown in FIG. 10. Display 600 may include one or more features relating to on-demand media (e.g., on-demand videos), such as "Pop-up Feature" option 602, "Provide Supplemental Content" option 604, "Overlaid onto the Media" option 606, "Without the Media" option 608, "Full Screen" option 610, and "Letterbox (Widescreen)" option 612. In this example, display 600 includes checkboxes 614-624 adjacent to the plurality of options. However, any other suitable user interface element may be used. For example, radio buttons, character fields, or on-screen buttons may be used. In some embodiments, a user may indicate his or her selection by placing a checkmark into one of checkboxes 614-624 adjacent to each option. For example, checkmarks may be placed into checkboxes 614-624 by highlighting one of the checkboxes with the remote control and pressing the "OK" key. The interactive television application may indicate the selection by displaying a checkmark in the checkbox.

When "Pop-up Feature" option 602 is selected, the interactive television application may provide supplemental content in windows that wholly or partially obscure the on-demand media while the media is being watched by the user. Alternatively, the window may be resized so as not to be obscured.

When "Provide Supplemental Content" option 604 is selected, the interactive television application may supplement the video-on-demand media with suitable passive or interactive content. For example, video-on-demand media may be supplemented with text, graphics, video, audio, animations, software applications, or any other suitable type of passive or interactive content. The supplemental content may be concurrently or non-concurrently displayed with the requested video-on-demand media. When "Overlaid onto the Media" option 606 is selected, the interactive television application may overlay supplemental content onto on-demand media. When "Without the Media" option 606 is selected, the interactive television application may display supplemental content outside of the on-demand video window. For example, supplemental content may be displayed in the black space that appears when the video-on-demand media is displayed in letterbox (widescreen) format. Alternatively, the window may be resized so as not to be obscured.

When "Full Screen" option 610 and "Letterbox (Widescreen)" option 612 are selected, the interactive television application may display on-demand media in full screen, and letterbox format, respectively.

In some embodiments, video-on-demand setup options 602-612 as shown in display 600 may be included with viewer services options 452 as shown in main menu display 450 (FIG. 5). For example, a user may select the "Setup" button of display 600. In response to the user selecting the "Setup" button, the user may be provided with options similar to those shown in display 600 of FIG. 10.

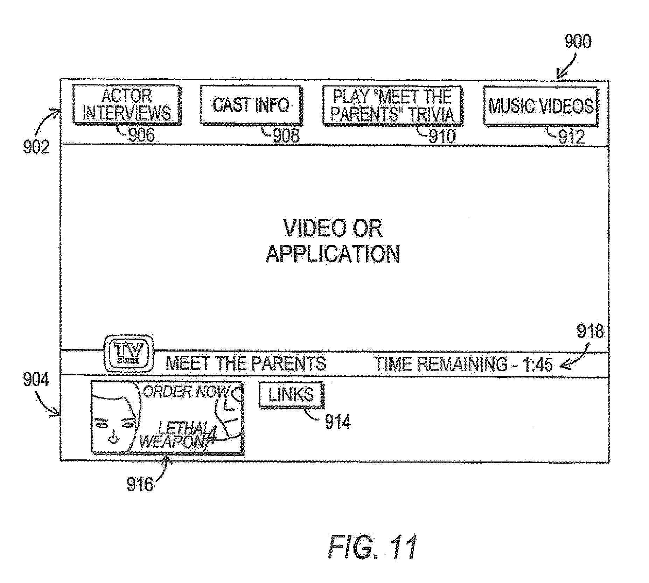

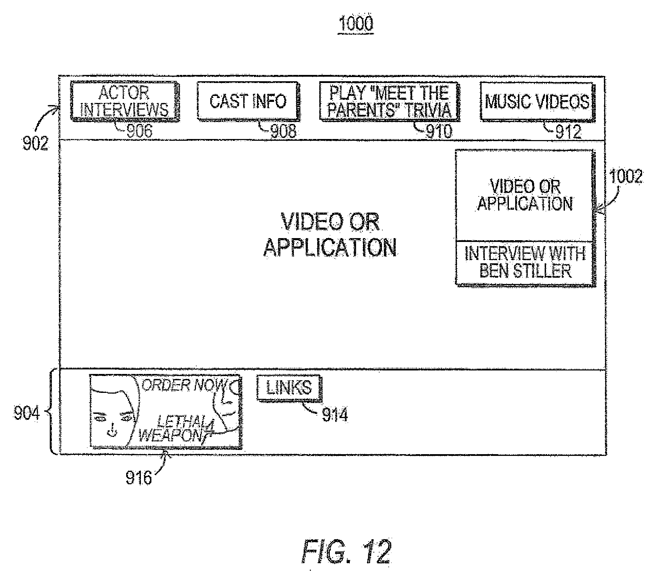

During playback, the interactive application may provide supplemental content for the on-demand media. As shown in FIGS. 12-19, for example, an interactive guidance application may superimpose supplemental content onto the on-demand media. In FIG. 11, display 900 shows the selected on-demand media in letterbox format. Letterbox format may include darkened regions 902 and 904. Darkened regions 902 and 904 may include buttons 906-914. In response to the user selecting a button 906-914, the interactive television application may present the user with supplemental content related to the on-demand media. Regions 902 and 904 may also include other content, such as interactive advertisement 916, logos, mail, current time, or any other suitable information.

The interactive television application may also display interactive advertisement 916 as part of display 900. If desired, advertisement 916 may be passive. Display 900 may also provide a status bar 918. Status bar 918 may include, for example, the provider logo, the title of the selected on-demand media, the time remaining of the media, or any other suitable information.

In some embodiments, the interactive television application may provide a non-letterbox display (not shown). Such a display may include a video or application window which is superimposed onto the display. In these embodiments, interactive advertisements, status bars, supplemental content, or any other suitable content may be overlaid onto the video or application window. For example, the interactive television application may automatically provide supplemental content based on the user-selected on-demand media. The supplemental content may be overlaid onto a window displaying the on-demand media. Alternatively, the window displaying the on-demand media ma be resized such that the advertisements, status bars, supplemental content, or any other suitable content, do not obscure the on-demand media.

On-screen interface elements, such as buttons 906-914, may provide users with access to supplemental content. For example, a visual indicator, such as an icon or any other suitable text or graphic, may appear on the screen. The visual indicator may represent interactivity that is available to the user. In response to the user selecting the visual indicator, supplemental content may be provided. In some embodiments, however, the interactive television application may automatically provide supplemental content. The interactive television application may provide supplemental content based on, for example, user-defined settings (e.g., setup display), the user-selected on-demand media, user favorites, or any other suitable information.

In the example of FIG. 11, display 900 includes "Actor Interviews" button 906, "Cast Info" button 908, "Play 'Meet the Parents' Trivia" button 910, "Music Videos" button 912, and "Links" button 914.

"Actor Interviews" button 906 may allow the user to access actor interviews for actors featuring in the on-demand media that the user is currently watching. In response to a user selecting button 906, the interactive television application may present the user with illustrative display 1000 as shown in FIG. 12. Display 1000 may provide a pop-up window 1002 overlaid onto the video or application. Pop-up window 1002 may be any suitable video or application window. In other approaches, the supplemental content in pop-up window 1002 may be displayed in region 902, region 904, or any other suitable location. Pop-up window 1002 may also be concurrently or non-concurrently displayed with the selected on-demand media. For example, the interactive television application may provide supplemental content in a pop-up window when a user has completed viewing the selected on-demand media.

In some embodiments, pop-up window 1002 may be activated upon user selection. In response to a user selecting button 906 with the remote control, for example, pop-up window 1002 may become active, and provide the user with the actor interview. In the example of FIG. 12, the user has selected to view the actor interview with Ben Stiller. The interactive television application may remove pop-up window 1002 in response to, for example, a user selecting button 906. In another approach, pop-up window 1002 may automatically disappear after the completion of the actor interview.

In some embodiments, the actor interview shown in pop-up window 1002 may correspond with the actor that the user is currently watching. For example, in a particular scene, Ben Stiller may have a monologue. In response to a user selecting button 906, the actor interview displayed in pop-up window 1002 may be an interview with Ben Stiller. In this example, the interactive television application is context sensitive such that it relates the supplemental content to the current portion of the on-demand media.

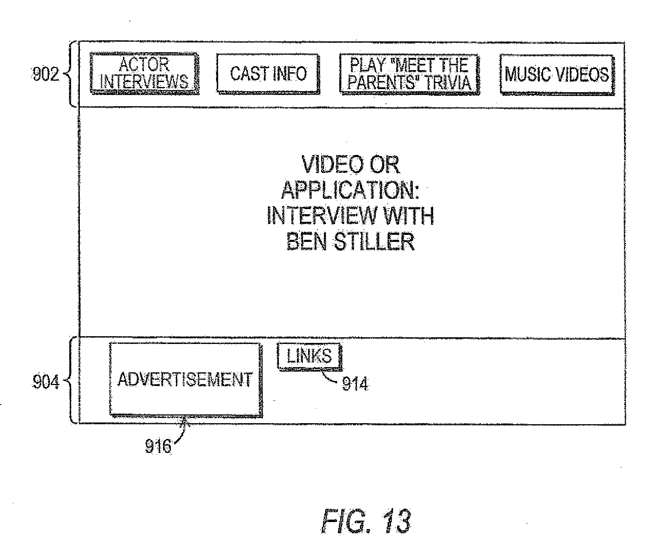

In other embodiments, the interactive television application may provide supplemental content without pop-up windows. As shown in FIG. 13, for example, the actor interview alternatively shown in pop-up window 1002 may instead replace the on-demand media. The interactive television application may pause the on-demand media when the actor interview is provided to allow the user to continue watching the on-demand media when the actor interview is over. In other embodiments, the interactive television application may provide actor interviews or other supplemental content within regions 902 and 904.

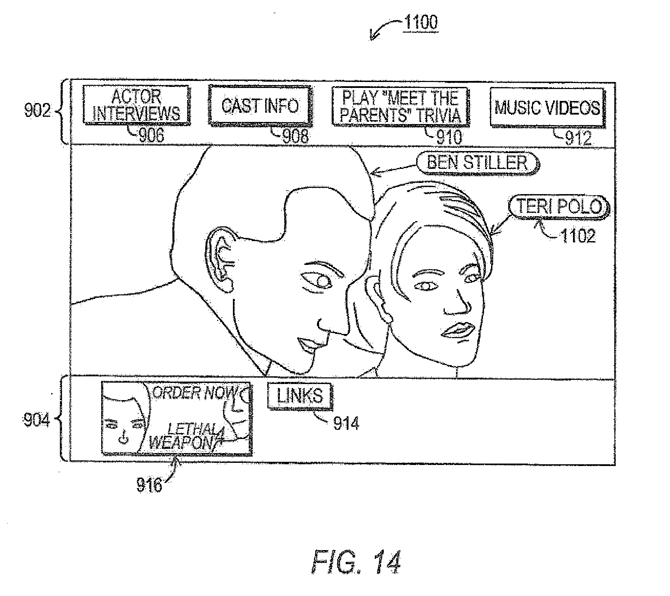

Another type of illustrative supplemental content is actor information. In response to a user selecting "Cast Info" button 908 of FIG. 14, for example, the interactive television application may provide supplemental content regarding actor information. In some embodiments, the interactive television application may provide supplemental content in pop-up windows 1102. The supplemental content may be context sensitive. For example, the interactive television application may provide information relating to each actor that the user is currently watching. In this example, when two characters, such as Ben Stiller and Teri Polo are shown in a particular scene, pop-up windows 1102 may provide the names of the characters or actors. For example, when Ben Stiller enters a scene, a pop-up window may appear to indicate that the actor that the user is currently watching is Ben Stiller. However, any other suitable information may also be included in pop-up windows 1102. For example, the interactive television application may also present the user with actor interviews, such as, for example, the interview shown in FIGS. 12 and 13, along with other actor information.

In this example and displays, generally, the interactive application presents supplemental content in pop-up windows 1102. In other approaches, the interactive application may also present supplemental content in region 902, region 904, or any other suitable location. The interactive television application may also concurrently or non-concurrently display pop-up windows 1102 with the selected on-demand media.

In some embodiments, pop-up window 1102 may be activated upon user selection. In response to a user selecting pop-up window 1002 with the remote control, for example, pop-up window 1102 may become active, and provide the user with supplemental content. The interactive television application may remove pop-up window 1102 in response to, for example, a user selecting button 908. In another approach, pop-up window 1102 may automatically disappear after the completion of the supplemental content (e.g., the actor that the user is currently watching exits the particular scene of on-demand media).

In some embodiments, when the user selects button 908, the interactive television application may enter a mode in which pop-up windows 1102 appear and disappear automatically as scenes change and as actors enter or exit in the on-demand media. This mode may be exited and pop-up windows 1102 may be removed when the user selects button 908.

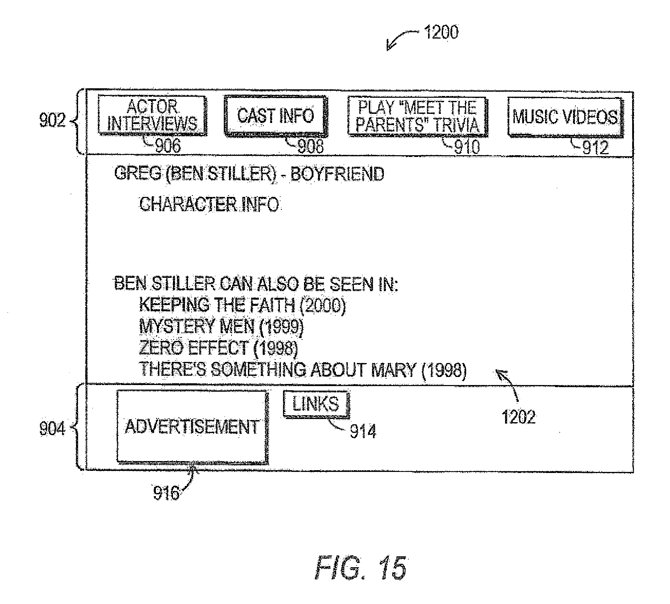

In some embodiments, when a user selects one of pop-up windows 1102, the interactive application may transfer the user to an illustrative display 1200 as shown in FIG. 15. Display 1200 may include detailed actor information window 1202, which may include actor information, such as, for example, character information, biographical information on the actor, others movies with that actor, etc. Any other suitable information relating to the character or the actor may also be displayed.

In response to a user unhighlighting button 908 by, for example, selecting button 908 with the remote control, the interactive television application may transfer the user back to the on-demand media window and the on-demand media may continue to be played.

In other embodiments, the interactive television application may provide supplemental content without pop-up windows. For example, the interactive television application may pause the on-demand media when the supplemental content is provided to allow the user to continue watching the on-demand media when the user has completed viewing the supplemental content.

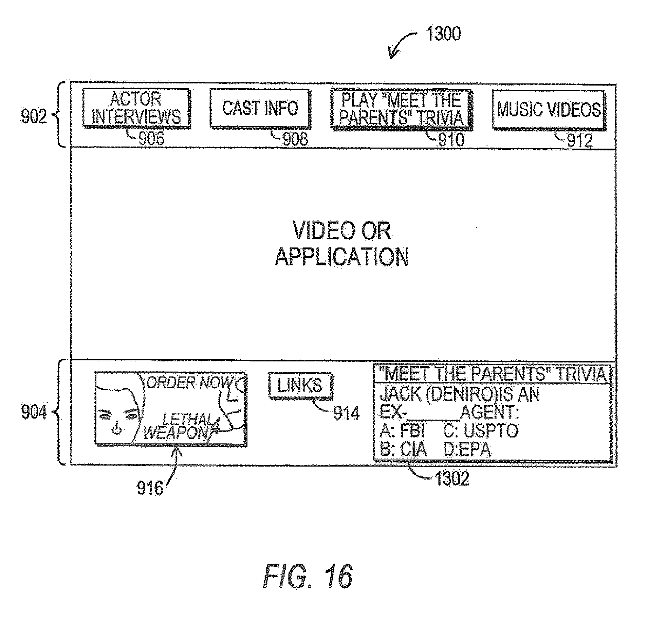

Another suitable type of supplemental content is interactive media related to the user-selected on-demand media. Interactive media may include a trivia game, an interactive quiz, an interactive purchase opportunity, a survey, or any other suitable media. As shown in FIG. 16, the interactive television application provides the user with "Play 'Meet the Parents' Trivia" button 910. In response to a user selecting button 910, the interactive television application may provide the user with interactive window 1302. As shown, during the viewing of "Meet the Parents," interactive window 1302 may be provided within region 904. In this example, interactive window 1302 provides the user with a "Meet the Parents" trivia game. However, the interactive television application may provide the user with any other suitable supplemental content in interactive window 1302. For example, the interactive television application may provide the user with a survey relating to the user's enjoyment of the selected media.

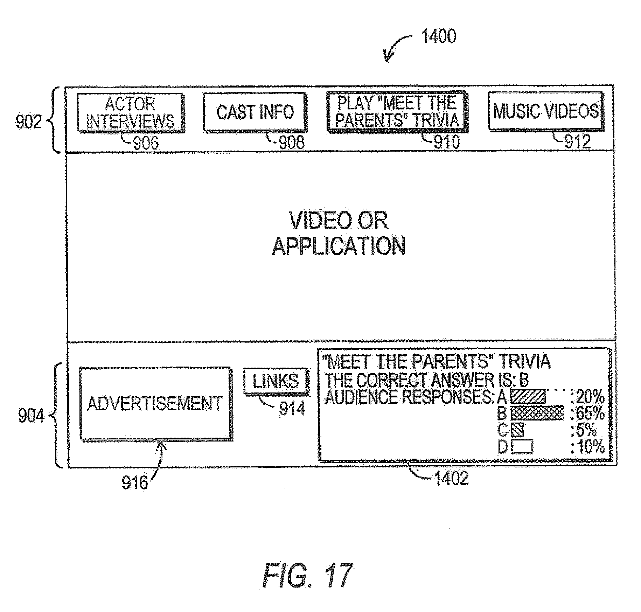

As shown in display 1400 of FIG. 17, the interactive television application may provide the user with interactive window 1402 showing the results of the trivia. Such results may include, for example, the correct answer, the number of participants, the distribution of user responses, or any other suitable information.

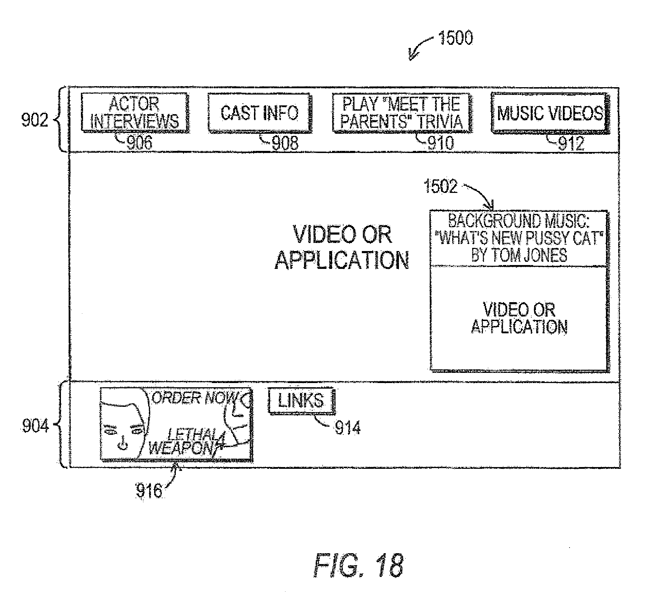

Another illustrative type of supplemental content is music information. As shown in FIG. 18, the interactive application provides the user with "Music Videos" button 912. In response to a user indicating a desire to access music information by, for example, selecting button 912, the interactive television application may provide the user with an interactive window of music information. An illustrative interactive window of music information 1502 is shown in FIG. 18. The music information may be context sensitive. For example, interactive window 1502 may display media that relates to the music played within the on-demand media when the user indicates a desire to access the music information. For example, when viewing the on-demand media, the user may indicate a desire to obtain information relating to the song playing in the background of the selected media by selecting button 912. The interactive television application may provide the title of the song, the artist, a clip of the music video, a picture of the artist, or any other suitable media in interactive window 1502.

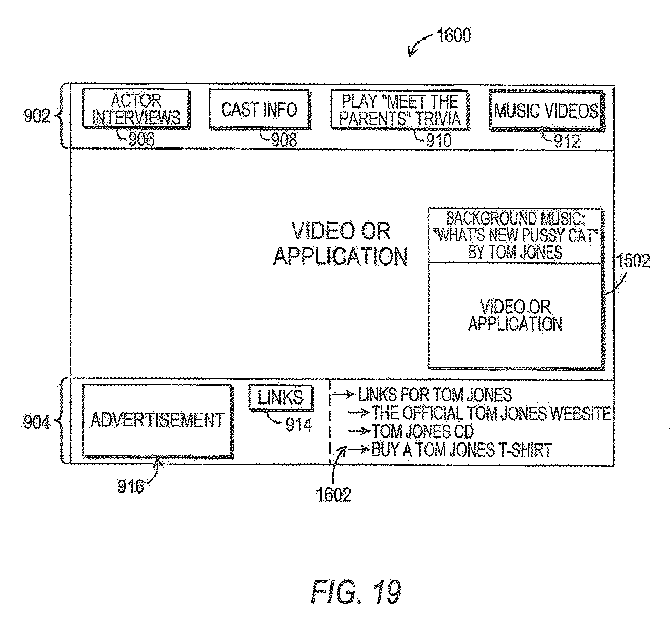

In response to a user selecting interactive window 1502, the interactive application may be provide the user with additional music information in an interactive window 1602 as shown in FIG. 19. Interactive window 1602 may display, for example, links corresponding to the music information in interactive window 1502. For example, window 1502 may display a music video of a song by an artist. Window 1602 may display a link to that artist's official website, a link to purchase merchandise relating to that artist, a link to purchase that artist's compact disc, or any other suitable link.

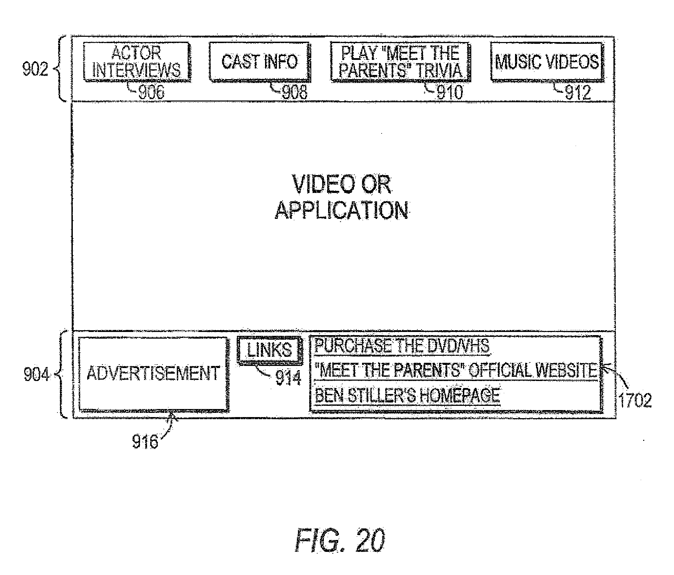

Supplemental content may include links which are related to on-demand media. As shown in FIG. 20, for example, the interactive television application may provide the user with "Links" button 914. In response to a user selecting button 914, the interactive television application may provide interactive window 1702 having one or more selectable links. Selectable links may include, for example, a link to purchase the selected media, a link to the official website of the selected media, a link to an actor's homepage, a link to a website selling merchandise relating to the selected media, or any other suitable link related to the selected media. In response to the user selecting a link, the interactive television application may transfer the user to, for example, a web site, a third-party application (e.g., a game, an information service, etc.), additional passive or interactive information associated with the media, or any other suitable supplemental content.

As another example, the interactive television application may provide the user with access to a list of titles for on-demand media. In response to a user selecting a title, the interactive television application may provide links to other information, applications, stores of information such as web sites, or other suitable resource destinations.

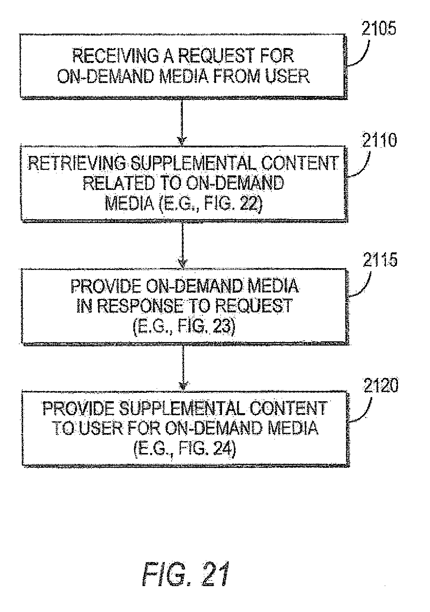

FIGS. 21-24 are flowcharts of illustrative steps involved in providing supplemental content for on-demand media in accordance with various embodiments of the present invention. In practice, the steps shown in FIGS. 21-24 may be performed in any suitable order, some may be deleted, and others added.

FIG. 21 shows a flow chart of illustrative steps involved in providing supplemental content with on-demand media in an interactive television application system. At step 2105, indications of user-identified on-demand media are received. On-demand media may include, for example, audio-on-demand, video-on-demand, electronic publications (e.g., books, magazines, newspapers, or any other suitable electronic publications), electronic games, software applications, or any other suitable on-demand media. Selecting on-demand media may include browsing through media listings. Media listings may include current media, upcoming media, or any other suitable media.

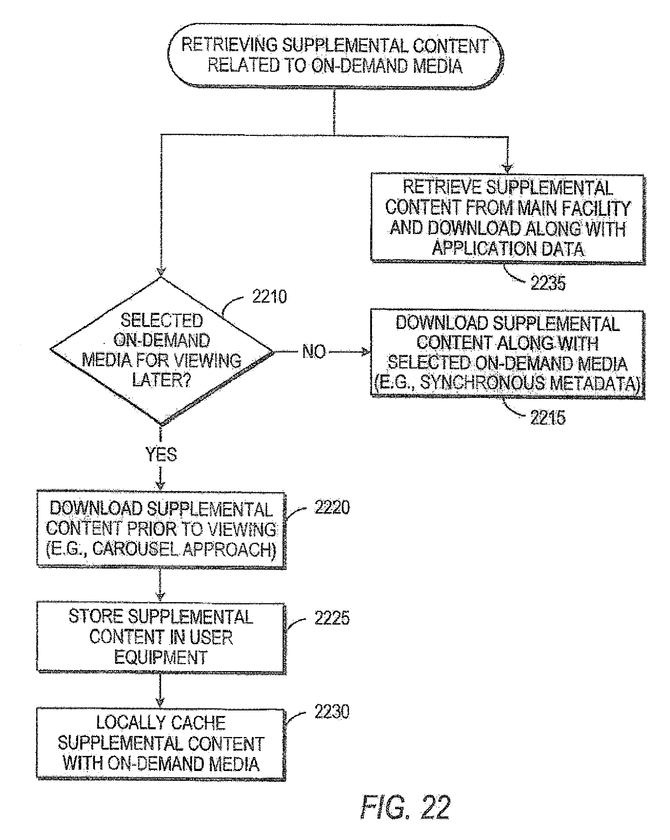

In response to the user's indication, the interactive television application may retrieve supplemental content related to the selected on-demand media. For example, a user may be provided with a media listing. When the user selects a particular on-demand media selection from the listing, the interactive television application may provide the user with an ordering display, as shown in FIG. 9. When the interactive television application receives an indication of the user-selected on-demand media, the interactive television application may retrieve supplemental content. The steps involved in providing supplemental content for on-demand media are discussed below in FIG. 22.

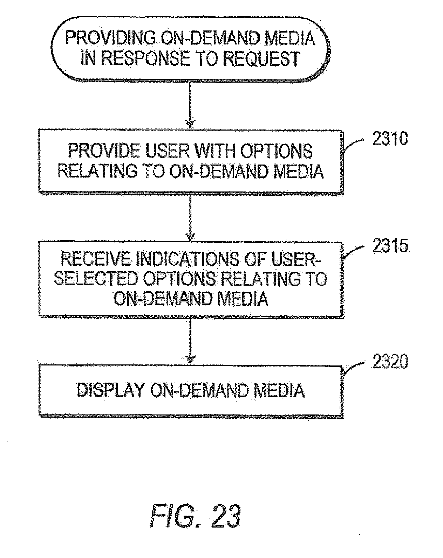

At step 2115, upon the interactive television application retrieving the supplemental content, the interactive television application may provide the user with the selected on-demand media. The steps involved in providing on-demand media are discussed below in FIG. 23.

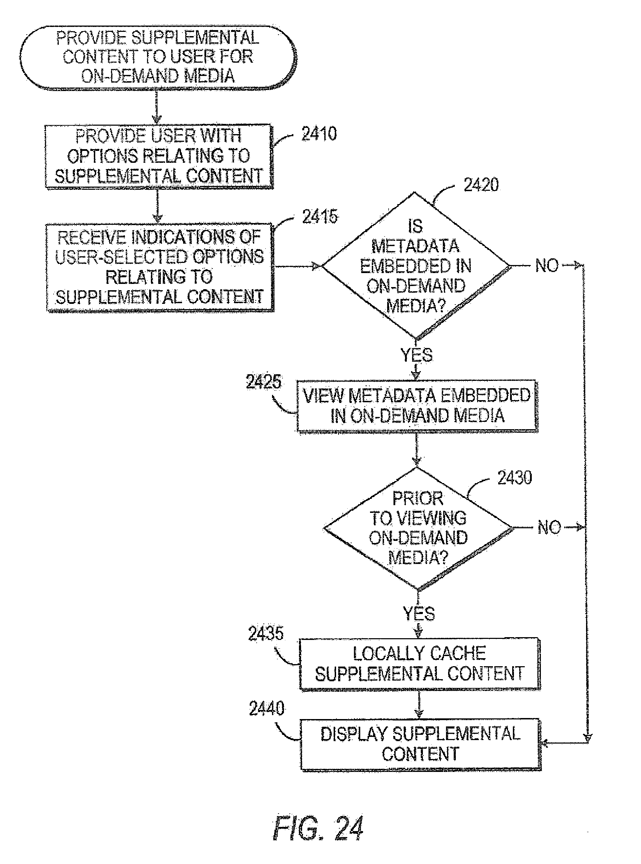

Some embodiments may allow users to watch or listen to supplemental content while simultaneously watching on-demand media. At step 2120, the interactive television application may provide the user with supplemental content for on-demand media. For example, in response to the interactive television application providing the user with on-demand media, the interactive television application may read the metadata embedded within the selected on-demand media. The metadata may direct the interactive television application to retrieve and locally cache supplemental content. Such supplemental content may be context sensitive. For example, the supplemental content may relate to a portion of the on-demand media. The steps involved in providing users with supplemental content for on-demand media are discussed below in FIG. 24.

It is noted that although the user is shown as viewing supplemental content and on-demand media simultaneously, the user may view supplemental content, view on-demand media, or both.

FIG. 22 is a flowchart of illustrative steps involved in retrieving supplemental content related to on-demand media, in accordance with one embodiment of the present invention. In response to receiving indications that the user has selected on-demand media, the interactive television application may retrieve supplemental content related to on-demand media. At step 2210, the interactive television application may determine if the user selected to view the on-demand media at a predetermined time. For example, the interactive television application may determine the scheduled time for the selected on-demand media (e.g., immediate playback, playback in two hours, etc.).

At step 2215, if the user has scheduled on-demand media for immediate viewing, the interactive television application may download the supplemental content along with the selected on-demand media (e.g., synchronous metadata). Supplemental content, or links to content, may be provided as, for example, synchronous metadata. Synchronous metadata is data that is sent logically at the same time as the media with which it is associated.

Alternately, at step 2220, the interactive television application may download supplemental content prior to viewing the on-demand media. For example, supplemental content may be provided in-band with or separate from the media, out-of-band, using a carousel-based approach, using a client-server based approach, using localized caching, using a combination of these approaches, or using any other suitable approach. In response to the interactive television application retrieving supplemental content prior to viewing the on-demand media, the interactive television application may store supplemental content in the user equipment at step 2225. At step 2230, when the interactive television application retrieves supplemental content, the interactive television application may also retrieve information associating supplemental content with the media (e.g., identifiers, links, or any other suitable information).

Alternatively, at step 2235, in response to receiving indications that the user has selected on-demand media, the interactive television application may retrieve supplemental content related to on-demand media from the main facility. The supplemental content may be downloaded along with the application data.

FIG. 23 is a flowchart of illustrative steps involved in providing a user with on-demand media, in accordance with one embodiment of the present invention. In response to a user request and in conjunction with retrieving supplemental content related to the selected on-demand media, the interactive television application may provide the user with on-demand media. At step 2310, the interactive television application may provide the user with options relating to on-demand media. For example, the interactive television application may provide the user with media listings organized by time, organized by channel, organized by genre, or organized using any suitable listings feature. The interactive television application may provide the user with options that allow the user to direct the interactive television application to provide displays containing only on-demand media listings, to provide displays containing only non-on-demand media listings, or to provide displays containing both on-demand media listings and non-on-demand media listings. These arrangements are merely illustrative examples.

At step 2315, indications of user-selected options are received. For example, if the users has selected one of the on-demand media listings from the list or display as shown in FIGS. 7 and 8, the interactive television application may provide the user with ordering displays (as shown in FIG. 9). Ordering displays may allow the user to view pricing information for the on-demand media, and may allow the user to provide a personal identification number (PIN) or other information that allows the interactive television application to process the order. In response to the user purchasing on-demand media, the interactive television application may provide the user with on-demand media at step 2320. For example, the interactive television application may direct media server 205 to provide a digital video stream of the selected on-demand media to user television equipment 200.

FIG. 24 is a flowchart of illustrative steps involved in providing a user with supplemental content relating to on-demand media, in accordance with one embodiment of the present invention. In response to providing the selected on-demand media, the interactive television application may provide the user with the corresponding supplemental content. At step 2410, the interactive television application may provide the user with options relating to supplemental content. For example, the interactive television application may provide the user with setup displays as shown in FIG. 10. The interactive television application may provide the user with options relating to the presentation of supplemental content (e.g., overlaid onto the on-demand media, displayed in a separate display, etc.).

Upon receiving indications of user-selected options relating to supplemental content at step 2415, the interactive television application may determine if supplemental content is provided as metadata at step 2420. If the metadata contains information associating supplemental content with on-demand media (e.g., identifiers, tags, links, or any other suitable information), the interactive television application may read the metadata at step 2425. For example, the metadata may contain links to supplemental content that may be context sensitive. At step 2430, the interactive television application may determine when the user desires to view the media. For example, the interactive television application may retrieve a schedule and determine the playback time associated with the selected on-demand media. If the user indicates a desire to view the on-demand media at a later time, the interactive television application may locally cache supplemental content to enhance the response time of the interactive television application at step 2435. At step 2440, the interactive television application may display the supplemental content to the user.

Thus, systems and methods for supplementing on-demand media are provided. One skilled in the art will realize that the present invention can be practiced by other than the described embodiments, which are presented for purposes of illustration and not of limitation, and that the present invention is limited only by the claims which follow.

The following embodiments are disclosed:
1. A method for providing on-demand media with supplemental content in an interactive television application, comprising:
   receiving a request for on-demand media from a user;
   retrieving supplemental content related to the on-demand media with the interactive television application;
   providing the on-demand media in response to the request; and
   providing supplemental content to the user while the user is viewing the on-demand media.
2. The method defined in item 1wherein the on-demand media is audio-on-demand media, video-on-demand media, electronic publications, software applications, or third-party applications.
3. The method defined in item1 further comprising indicating the availability of supplemental content to the user.
4. The method defined in item 1 further comprising providing a visual indicator of the availability of supplemental content.
5. The method defined in item 4 wherein the visual indicator is selected from the group consisting of text, graphics, audio, video, and animation.
6. The method defined in item 1 further comprising receiving a request for supplemental content from the user.
7. The method defined in item 1 wherein providing the supplemental content comprises providing supplemental content concurrently with the on-demand media.
8. The method defined in item 1 wherein providing the supplemental content further comprises providing supplemental content separately from the on-demand media.
9. The method defined in item 1 wherein retrieving supplemental content further comprises retrieving supplemental content prior to viewing the on-demand media.
10. The method defined in item 1 wherein retrieving supplemental content further comprises retrieving supplemental content prior to viewing the on-demand media using a carousel approach.
11. The method defined in item 1 wherein retrieving supplemental content further comprises storing supplemental content.
12. The method defined in item 1 wherein retrieving supplemental content further comprises locally caching the supplemental content associated with the on-demand media.
13. The method defined in item 1 wherein the supplemental content is synchronous metadata.
14. The method defined in item 1 further comprising:
   providing the user with at least one option related to supplemental content; and
   receiving an indication of the at least one option from the user.
15. The method defined in item 1 wherein providing the supplemental content further comprises providing an actor interview of an actor in the on-demand media.
16. The method defined in item1 wherein providing the supplemental content further comprises providing an actor interview related to an actor the user is currently watching.
17. The method defined in item 1 wherein providing the supplemental content further comprises providing information related to an actor the user is currently watching.
18. The method defined in item 1 wherein providing the supplemental content further comprises providing interactive media related to the on-demand media.
19. The method defined in item18 wherein the interactive media is a survey.
20. The method defined in item 18 wherein the interactive media is an interactive game.
21. The method defined in item 1 wherein providing the supplemental content further comprises providing information related an audio portion of the on-demand media.
22. The method defined in item 21 wherein providing information further comprises providing links related to the audio portion of the on-demand media.
23. The method defined in item 1 wherein providing the supplemental content further comprises providing links to supplemental content related to the on-demand media.
24. The method defined in item1 wherein providing the on-demand media in response to the request further comprises:
   providing the user with at least one option related to the on-demand media; and
   receiving an indication of the at least one option from the user.
25. The method defined in item 1 wherein providing supplemental content to the user while the user is viewing the on-demand media further comprises providing supplemental content to the user in response to receiving a request from the user.
26. A system for providing on-demand media with supplemental content in an interactive television application, comprising:
   means for receiving a request for on-demand media from a user;
   means for retrieving supplemental content related to the on-demand media with the interactive television application;
   means for providing the on-demand media in response to the request; and
   means for providing supplemental content to the user while the user is viewing the on-demand media.
27. The system defined in item 26 wherein the on-demand media is audio-on-demand media, video-on-demand media, electronic publications, software applications, or third-party applications.
28. The system defined in item 26 further comprising means for indicating the availability of supplemental content to the user.
29. The system defined in item 26 further comprising means for providing a visual indicator of the availability of supplemental content.
30. The system defined in item29 wherein the visual indicator is selected from the group consisting of text, graphics, audio, video, and animation.
31. The system defined in item 26 further comprising means for receiving a request for supplemental content from the user.
32. The system defined in item26 wherein the means for providing the supplemental content comprises means for providing supplemental content concurrently with the on-demand media.
33. The system defined in item26 wherein the means for providing the supplemental content further comprises means for providing supplemental content separately from the on-demand media.
34. The system defined in item 26 wherein the means for retrieving supplemental content further comprises means for retrieving supplemental content prior to viewing the on-demand media.
35. The system defined in item 26 wherein the means for retrieving supplemental content further comprises means for retrieving supplemental content prior to viewing the on-demand media using a carousel approach.
36. The system defined in item 26 wherein the means for retrieving supplemental content further comprises means for storing supplemental content.
37. The system defined in item 26 wherein the means for retrieving supplemental content further comprises means for locally caching the supplemental content associated with the on-demand media.
38. The system defined in item 26 wherein the supplemental content is synchronous metadata.
39. The system defined in item 26 further comprising:
   means for providing the user with at least one option related to supplemental content; and
   means for receiving an indication of the at least one option from the user.
40. The system defined in item 26 wherein the means for providing the supplemental content further comprises means for providing an actor interview of an actor in the on-demand media.
41. The system defined in item 26 wherein the means for providing the supplemental content further comprises means for providing an actor interview related to an actor the user is currently watching.
42. The system defined in item 26 wherein the means for providing the supplemental content further comprises means for providing information related to an actor the user is currently watching.
43. The system defined in item 26 wherein the means for providing the supplemental content further comprises means for providing interactive media related to the on-demand media.
44. The system defined in item 43 wherein the interactive media is a survey.
45. The system defined in item43 wherein the interactive media is an interactive game.
46. The system defined in item 26 wherein the means for providing the supplemental content further comprises means for providing information related an audio portion of the on-demand media.
47. The system defined in item 46 wherein the means for providing information further comprises means for providing links related to the audio portion of the on-demand media.
48. The system defined in item 26 wherein the means for providing the supplemental content further comprises means for providing links to supplemental content related to the on-demand media.
49. The system defined in item 26 wherein the means for providing the on-demand media in response to the request further comprises:
   means for providing the user with at least one option related to the on-demand media; and
   means for receiving an indication of the at least one option from the user.
50. The system defined in item 26 wherein the means for providing supplemental content to the user while the user is viewing the on-demand media further comprises means for providing supplemental content to the user in response to receiving a request from the user.
51. A system for providing on-demand media with supplemental content in an interactive television application, comprising:
   a user input device;
   a display device;
   the interactive television application implemented at least partially on control circuitry and programmed to:
      receive a request for on-demand media from a user;
      retrieve supplemental content related to the on-demand media with the interactive television application;
      provide the on-demand media in response to the request; and
      provide supplemental content to the user while the user is viewing the on-demand media.
52. The system defined in item 51 wherein the on-demand media is audio-an-demand media, video-on-demand media, electronic publications, software applications, or third-party applications.
53. The system defined in item 51 wherein the interactive television application is further programmed to indicate the availability of supplemental content to the user.
54. The system defined in item 51 wherein the interactive television application is further programmed to provide a visual indicator of the availability of supplemental content.
55. The system defined in item 54 wherein the visual indicator is selected from the group consisting of text, graphics, audio, video, and animation.
56. The system defined in item1 wherein the interactive television application is further programmed to receive a request for supplemental content from the user.
57. The system defined in item 51 wherein the interactive television application is further programmed to provide supplemental content concurrently with the on-demand media.
58. The system defined in item 51 wherein the interactive television application is further programmed to provide supplemental content separately from the on-demand media.
59. The system defined in item 51 wherein the interactive television application is further programmed to retrieve supplemental content prior to viewing the on-demand media.
60. The system defined in item 51 wherein the interactive television application is further programmed to retrieve supplemental content prior to viewing the on-demand media using a carousel approach.
61. The system defined in item 51 wherein the interactive television application is further programmed to store supplemental content.
62. The system defined in item 51 wherein the interactive television application is further programmed to locally cache the supplemental content associated with the on-demand media.
63. The system defined in item 51 wherein the supplemental content is synchronous metadata.
64. The system defined in item 51 wherein the interactive television application is further programmed to:
   provide the user with at least one option related to supplemental content; and
   receive an indication of the at least one option from the user.
65. The system defined in item 51 wherein the interactive television application is further programmed to provide an actor interview of an actor in the on-demand media.
66. The system defined in item 51 wherein the interactive television application is further programmed to provide an actor interview related to an actor the user is currently watching.
67. The system defined in item 51 wherein the interactive television application is further programmed to provide information related to an actor the user is currently watching.
68. The system defined in item 51 wherein the interactive television application is further programmed to provide interactive media related to the on-demand media.
69. The system defined in item 68 wherein the interactive media is a survey.
70. The system defined in item 68 wherein the interactive media is an interactive game.
71. The system defined in item 51 wherein the interactive television application is further programmed to provide information related an audio portion of the on-demand media.
72. The system defined in item 51 wherein the interactive television application is further programmed to provide links related to the audio portion of the on-demand media.
73. The system defined in item 51 wherein the interactive television application is further programmed to provide links to supplemental content related to the on-demand media.
74. The system defined in item 51 wherein the interactive television application is further programmed to:
   provide the user with at least one option related to the on-demand media; and
   receive an indication of the at least one option from the user.
75. The system defined in item 51 wherein the interactive television application is further programmed to provide supplemental content to the user in response to receiving a request from the user.
76. A processor readable medium encoded with machine-readable instructions for providing on-demand media with supplemental content in an interactive television application, the machine-readable instructions comprising:
   receiving a request for on-demand media from a user;
   retrieving supplemental content related to the on-demand media with the interactive television application;
   providing the on-demand media in response to the request; and
   providing supplemental content to the user while the user is viewing the on-demand media.
77. The processor readable medium defined in item 76 wherein the on-demand media is audio-on-demand media, video-on-demand media, electronic publications, software applications, or third-party applications.
78. The processor readable medium defined in item 76 wherein the machine-readable instructions also indicate the availability of supplemental content to the user.
79. The processor readable medium defined in item76 wherein the machine-readable instructions also provide a visual indicator of the availability of supplemental content.
80. The processor readable medium defined in 79 wherein the visual indicator is selected from the group consisting of text, graphics, audio, video, and animation.
81. The processor readable medium defined in item 76 wherein the machine-readable instructions also receive a request for supplemental content from the user.
82. The processor readable medium defined in item 76 wherein the machine-readable instructions also provide supplemental content concurrently with the on-demand media.
83. The processor readable medium defined in item 76 wherein the machine-readable instructions also provide supplemental content separately from the on-demand media.
84. The processor readable medium defined in item 76 wherein the machine-readable instructions also retrieve supplemental content prior to viewing the on-demand media.
85. The processor readable medium defined in item 76 wherein the machine-readable instructions also retrieve supplemental content prior to viewing the on-demand media using a carousel approach.
86. The processor readable medium defined in item 76 wherein the machine-readable instructions also store supplemental content.
87. The processor readable medium defined in item 76 wherein the machine-readable instructions also locally cache the supplemental content associated with the on-demand media.
88. The processor readable medium defined in item 76 wherein the supplemental content is synchronous metadata.
89. The processor readable medium defined in item 76 wherein the machine-readable instructions also:
   provide the user with at least one option related to supplemental content; and
   receive an indication of the at least one option from the user.
90. The processor readable medium defined in item 76 wherein the machine-readable instructions also provide an actor interview of an actor in the on-demand media.
91. The processor readable medium defined in item 76 wherein the machine-readable instructions also provide an actor interview related to an actor the user is currently watching.
92. The processor readable medium defined in item 76 wherein the machine-readable instructions also provide information related to an actor the user is currently watching.
93. The processor readable medium defined in item 76 wherein the machine-readable instructions also provide interactive media related to the on-demand media.
94. The processor readable medium defined in item 76 wherein the interactive media is a survey.
95. The processor readable medium defined in item 94 wherein the interactive media is an interactive game.
96. The processor readable medium defined in item 76 wherein the machine-readable instructions also provide information related an audio portion of the on-demand media.
97. The processor readable medium defined in item 76 wherein the machine-readable instructions also provide links related to the audio portion of the on-demand media.
98. The processor readable medium defined in item 76 wherein the machine-readable instructions also provide links to supplemental content related to the on-demand media.
99. The processor readable medium defined in item 76 wherein the machine-readable instructions also:
   provide the user with at least one option related to the on-demand media; and
   receive an indication of the at least one option from the user.
100. The processor readable medium defined in item 76 wherein the machine-readable instructions also provide supplemental content to the user in response to receiving a request from the user.

## Claims

1. A method for providing a media content to user equipment, the method comprising:
receiving a request for media content, wherein the media content is available for viewing at any time; and
in response to the request for the media content:
retrieving supplemental content for the requested media content at the user equipment;
performing an action at the user equipment in accordance with the retrieved supplemental content; and
displaying the requested media content on the user equipment.

2. The method of claim 1 in which the action is to display the supplemental content on the user equipment.

3. The method of claim 1 in which the supplemental content includes a command and the action is to retrieve further supplemental content in response to the command.

4. The method of claim 3 in which the command is user actuated.

5. The method of claim 1, wherein the retrieved supplemental content is displayed concurrently or non-concurrently with the media asset.

6. The method of claim 1, further comprising retrieving on-demand media content from a distribution facility or a digital storage device.

7. The method of claim 1, wherein the media asset is on-demand media content.

8. The method of claim 1, wherein the media content and the supplemental content are received for display over an Internet link.

9. A system for providing a media content to user equipment comprising:
means for receiving a request for media content from a user, wherein the media content is available for viewing at any time; and
means for responding to the request for the media content to:
retrieve supplemental content for the requested media content;
perform an action at the user equipment in accordance with the retrieved supplemental content; and
display the requested media content on the user equipment.

10. The system of claim 9 in which the means for responding perform the action to display the supplemental content on the user equipment.

11. The system of claim 9 in which the supplemental content includes a command and the action is to retrieve further supplemental content in response to the command.

12. The method of claim 11 in which the command is user actuatable.

13. The system of claim 9, wherein the means for responding display supplemental content concurrently or non-concurrently with the media content.

14. The system of claim 9, further comprising means for retrieving on-demand media from a distribution facility or a digital storage device.

15. The system of claim 9, wherein the media content is on-demand media content.

16. The system of claim 9, wherein the media content and the supplemental content are received for display over an Internet link.
